(19) **Europäisches Patentamt / European Patent Office / Office européen des brevets**

(11) **EP 1 906 224 B1**

(12) **EUROPEAN PATENT SPECIFICATION**

(45) Date of publication and mention
of the grant of the patent:
**25.01.2012 Bulletin 2012/04**

(51) Int Cl.:
**G02B 21/00** $^{(2006.01)}$

(21) Application number: **06766989.5**

(22) Date of filing: **20.06.2006**

(86) International application number:
**PCT/JP2006/312328**

(87) International publication number:
**WO 2007/010697 (25.01.2007 Gazette 2007/04)**

(54) **Confocal Microscope Apparatus**

Konfokale Mikroskopvorrichtung

Dispositif de microscopes confocaux

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.07.2005 JP 2005211159**

(43) Date of publication of application:
**02.04.2008 Bulletin 2008/14**

(73) Proprietor: **NIKON CORPORATION**
**Chiyoda-ku**
**Tokyo 100-8331 (JP)**

(72) Inventors:
• **OKUGAWA, Hisashi,**
**C/O NIKON CORPORATION**
**Chiyoda-ku,**
**Tokyo 100-8331 (JP)**

• **FUKUMOTO, Kensaku,**
**C/O NIKON CORPORATION**
**Chiyoda-ku,**
**Tokyo 100-8331 (JP)**

(74) Representative: **Whitlock, Holly Elizabeth Ann et al**
**R.G.C. Jenkins & Co**
**26 Caxton Street**
**London SW1H 0RJ (GB)**

(56) References cited:
**WO-A2-2005/006050     DE-A1- 19 650 391**
**DE-A1- 19 824 460     JP-A- 10 104 522**
**US-A- 5 932 871**

## Description

### TECHNICAL FIELD

The present invention relates to a confocal microscope apparatus for observing an organism sample etc.

### BACKGROUND ART

A confocal microscope is a microscope in which an effective focal depth is reduced using a confocal diaphragm and an object to be observed is sectioned (sectioning) In a thin layer in a sample (Patent document 1, Patent document 2, etc.)
In Patent document 1, a technique (1) for varying the diameter of a confocal diaphragm in order to make the thickness of a layer (sectioning resolution) to be observed variable, and a technique (2) for switching and arranging pinhole components of plural kinds having different pinhole diameters on the confocal diaphragm plane are disclosed.

In Patent document 2, a technique (3) for branching light incident to the inside and outside of the confocal diaphragm, individually detecting them, and adding the detected signals as needed in order to turn on/off the function of sectioning is disclosed.
Patent document 1: Japanese Unexamined Utility Model Publication No. Hei 6-16927
Patent document 2: Japanese Unexamined Patent Application Publication No. Hei 10-104522
Patent application US 2007/41089 relates to an imaging device arranged for generating two images which are filtered differently by a mask and for combining same.

### DISCLOSURE OF THE INVENTION

### PROBLEMS TO BE SOLVED BY THE INVENTION

If an attempt is made to vary the sectioning resolution in a variety of manners by applying the techniques (1), (2), and (3), it can be thought to be a solution to increase the number of variable steps of the diameter of the confocal diaphragm, the number of kinds of the pinhole component, and the number of branches of light, respectively. In any case, however, a mechanism in relation to detection and an optical system become complex and there is a possibility that it may cause difficulty in cost and alignment precision.
An object of the present invention is therefore to provide a confocal microscope apparatus capable of increasing a degree of freedom in varying sectioning resolution while keeping the configuration of the confocal microscope simple.

### MEANS FOR SOLVING THE PROBLEMS

Aspects of the present invention are set out in the appended claims.

### BRIEF DESCRIPTION OF THE DRAWINGS

Fig. 1 is a configuration diagram of a confocal microscope system in a first embodiment:
Fig. 2 is a diagram for illustrating a detecting part 10 in the first embodiment:
Fig. 3 is a diagram for illustrating processing of detection signals sa, sb by a circuit part 21 and a computer 22;
Fig. 4 is a diagram showing a relationship between selected resolution, weighting coefficient a, and image data D;
Figs. 5(A) and 5(B) are diagrams showing information reflected in each image data acquired in the setting of rb=3ra. Fig. 5(C) is a diagram showing information reflected in the product (Da·Db) acquired in the setting of rb=3ra, and Fig. 5(D) is a diagram showing information reflected in the quotient (Da/Db) acquired in the setting of rb=3ra;
Figs. 6(A) and 6(B) are diagrams showing information reflected in each image data acquired in the setting of rb=4ra. Fig. 6(C) is a diagram showing information reflected in the product (Da·Db) acquired in the setting of rb=4ra, and Fig. 6(D) is a diagram showing information reflected in the quotient (Da/Db) acquired in the setting of rb=4ra;
Fig. 7 is a diagram showing a variant example of the detecting part 10 not being part of the invention.
Fig. 8 is a diagram showing another variant example of the detecting part 10 not being part of the invention;
Fig. 9 is a diagram showing still another variant example of the detecting part 10;
Fig. 10 is a diagram for illustrating a detecting part 10 in a second embodiment; and
Fig. 11 is a diagram showing information reflected in the image data D acquired in the setting of $\alpha$=+0.8, $\beta$=-1.6 in the second embodiment.

### BEST MODE FOR CARRYING OUT THE INVENTION

[First embodiment]

A first embodiment of the present invention will be described. The present embodiment is an embodiment of a confocal microscope system.

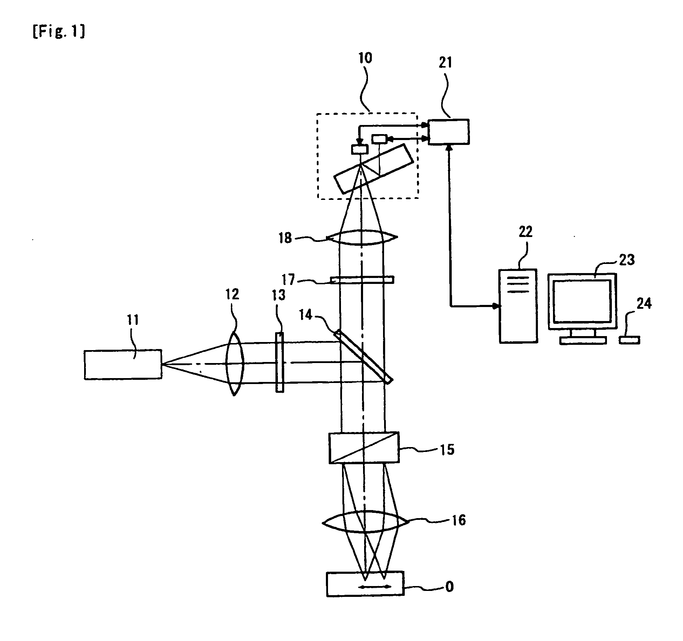

Fig. 1 is a configuration diagram of the present system. As shown in Fig. 1, the present system includes, as components of a confocal microscope, a light source 11, an illuminating lens 12, a filter 13, a dichroic mirror 14, a galvano mirror 15, an objective lens 16, a filter 17, a collecting lens 18, a detecting part 10, etc. In addition, the present system also includes a circuit part 21, a computer 22, etc., in order to drive and control the confocal microscope. Incidentally, to the computer 22, a monitor 23 and an input device 24 are connected, and programs necessary to activate the present system are installed in advance via the internet or recording media.

In the present system, illuminating light emitted from the light source 11 is collected on a sample 0 via the illuminating lens 12, the filter 13, the dichroic mirror 14, the galvano mirror 15, and the objective lens 16. The observing light flux generated at the collecting point enters the detecting part 10 via the objective lens 16, the galvano mirror 15, the dichroic mirror 14, the filter 17, and the collecting lens 18. The detecting part 10 acquires information of the collecting point on the sample 0 based on the incident observing light flux.

When the galvano mirror 15 is driven, the collecting point scans two-dimensionally on the sample 0, and therefore, the detecting part 10 can acquire two-dimensional information (information of the microscopic image) of the sample 0 based on the observing light flux generated during the period.

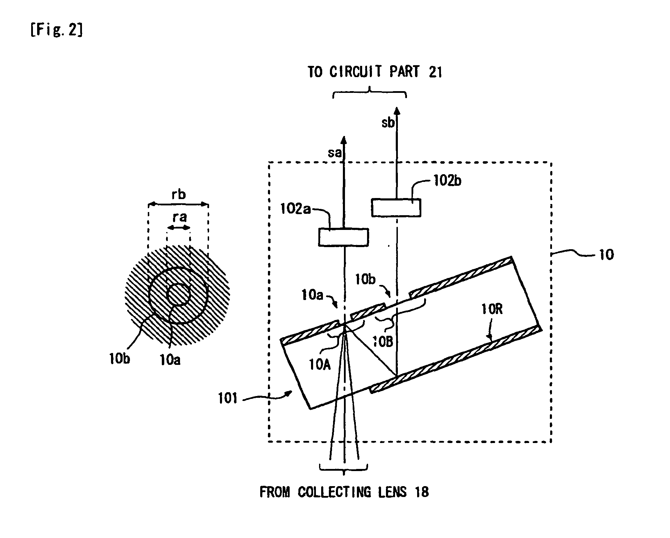

Fig. 2 is a diagram for illustrating the detecting part 10 in the present embodiment. As shown in Fig. 2, the detecting part 10 is provided with a masking component 101 and two light detectors 102a, 102b.

The masking component 101 is made by forming a reflecting film etc. of a proper pattern on a substrate transparent to the observing light flux. The masking component 101 is arranged in the vicinity of the focal point of the collecting lens 18. On the masking component 101, a pinhole mask 10A, a reflecting plane 10R, and a pinhole mask 10B are formed.

The pinhole mask 10A is arranged in an inclined posture in the confocal diaphragm plane, that is, in the plane substantially at the center of the focal depth of the collecting lens 18. The masking plane on the incidence side of the pinhole mask 10A constitutes a reflecting plane. Accordingly, the observing light flux collected in the pinhole 10a among the observing light fluxes incident to the pinhole mask 10A transmits the pinhole mask 10A and the observing light flux incident to the periphery of the pinhole 10a reflects from the pinhole mask 10A.

The reflecting plane 10R is arranged in parallel to the reflecting plane of the pinhole mask 10A at a position that receives the observing light flux reflecting from the pinhole mask 10A, serving to reflect the observing light flux.

The pinhole mask 10B is arranged so that the center thereof coincides with the center of the pinhole mask 10A at a position that receives the observing light flux reflected from the reflecting plane 10R. Since the focal depth of the collecting lens 10 is sufficiently deep and sufficiently longer than the optical path from the pinhole mask 10A to the pinhole mask 10B, the place where the pinhole mask 10B is arranged is included within the focal depth of the collecting lens 10. The diameter $rb$ of the pinhole 10b of the pinhole mask 10B is greater than the diameter $ra$ of the pinhole 10a of the pinhole mask 10A and is set to twice the diameter $ra$ ($rb=2ra$). The observing light flux incident into the pinhole 10b among the observing light fluxes incident to the pinhole mask 10B transmits the pinhole mask 10B and the observing light flux incident to the periphery of the pinhole 10b is cut by the pinhole mask 10B.

On the left-hand side in Fig. 2, a rough relationship in magnitude among the section of the observing light flux, the pinhole 10a, and the pinhole 10b is shown. According to above-described masking component 101, the observing light flux from the collecting lens 18 is divided into two kinds, that is, the "observing light flux incident to the pinhole 10a" and the "observing light flux incident to the pinhole 10b not incident to the pinhole 10a". In other words, it is divided into two kinds, that is, the "observing light flux incident to a circular area at the center of the confocal diaphragm plane" and the "observing light flux incident to the toroidal area around the circular area". Then, the amount of light of the former is detected by the light detector 102a and the amount of light of the latter is detected by the light detector 102b. In other words, the two kinds of observing light flux are detected simultaneously and individually.

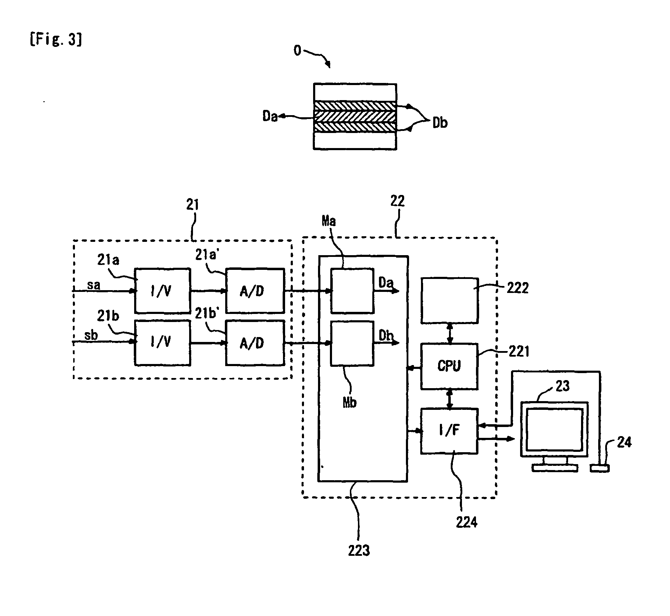

These light detectors 102a, 102b are driven continuously during the above-described two-dimensional scanning, generating the detection signals sa, sb, repeatedly. These detection signals sa, sb are sequentially taken into the circuit part 21 of the present system. Fig. 3 is a diagram for illustrating the processing of the detection signals sa, sb by the circuit part 21 and the computer 22. As shown in Fig. 3, the circuit part 21 is provided with two I/V converters 21a, 21b and two A/D converters 21a', 21b' in order to carry out parallel processing of the detection signals sa, sb. In addition, the computer 22 is provided with a CPU 221, a storage part (RAM, hard disc, etc.) 222, an imaging board 223, an I/F circuit 224, etc. Among these, the imaging board 223 is provided at least with two frame memories Ma, Mb.

One detection signal sa is sequentially taken into the frame memory Ma via the I/V converter 21a and the A/D converter 21a' in this order. The CPU 221 creates image data Da indicative of a microscopic image of the sample 0 based on the detection signal sa corresponding to one frame on the frame memory Ma and stores it in the storage part 222. The image data Da is based on the observing light flux that has been collected in the smaller pinhole of the confocal microscope. Accordingly, the image data Da includes many items of information about the layer (specific layer) in the vicinity of the position in focus in the sample 0 as shown on the upper side of Fig. 3.

Further, the other detection signal sb is sequentially taken into the frame memory Mb via the I/V converter 21b and the A/D converter 21b' in this order. The CPU 221 creates image data Db indicative of a microscopic image of the sample 0 based on the detection signal sb corresponding to one frame on the frame memory Mb and stores it in the storage part 222. The image data Db is based on the observing light flux that has entered the larger pinhole of the confocal microscope instead of having been collected in the smaller pinhole. Accordingly, the image data Db includes many items of information about the layer (peripheral layer) around the specific layer in the sample 0 as shown on the upper side of Fig. 3.

Here, it is possible for the operator of the present system to specify sectioning resolution for the computer 22 with a desired timing before or after acquiring the image data Da, Db. Selection of resolution is carried out via the input device 24.

The resolution the operator can specify is arbitrary, for example, in the range of from "high" to "low". The content of selection (selected resolution) is recognized by the CPU 221 via the I/F circuit 224. The CPU 221 performs arithmetic operations on the image data Da, Db in accordance with the selected resolution to create image data D and causes the monitor 23 to displays it.

The arithmetic operation to create the data includes arithmetic operation of weighted sum for each pixel of the image data Da, Db and is expressed, for example, by the following expression (1).

$$D = Da + \alpha \cdot Db \cdots (1)$$

Then, the weighting coefficient $\alpha$ in the expression (1) is set to a value in accordance with the selected resolution. The range the weighting coefficient $\alpha$ can assume is, for example, $+1 \geq \alpha \geq -1$. The higher the selected resolution is, the weighting coefficient $\alpha$ is set to a value, the closer to -1, and the lower the selected resolution is, the weighting coefficient $\alpha$ is set to a value, the closer to +1.

However, when the weighting coefficient $\alpha$ is set to a negative value, there is the possibility that part of pixel values of the created image data D is negative. In this case, the negative pixel values may be replaced with "0". In addition, there is the possibility that the created image data D exceeds the dynamic range of the displayed image, and therefore, it is necessary for the image data D to be converted so that it fits in the dynamic range before it is displayed.

For example, the CPU 221 replaces the pixel values of the pixels exceeding the dynamic range among the image data D with the maximum value of the dynamic rage (65,535 for 16 bits) regardless of the pixel value. Alternatively, the CPU 221 normalizes the entire image data D so that it fits in the dynamic range. In such a case, the following expression (2) may be used instead of the above expression (1) when creating the image data D. The following expression (2) is an expression of weighted average.

$$D = (Da + \alpha \cdot Db) / (1 + \alpha) \cdots (2)$$

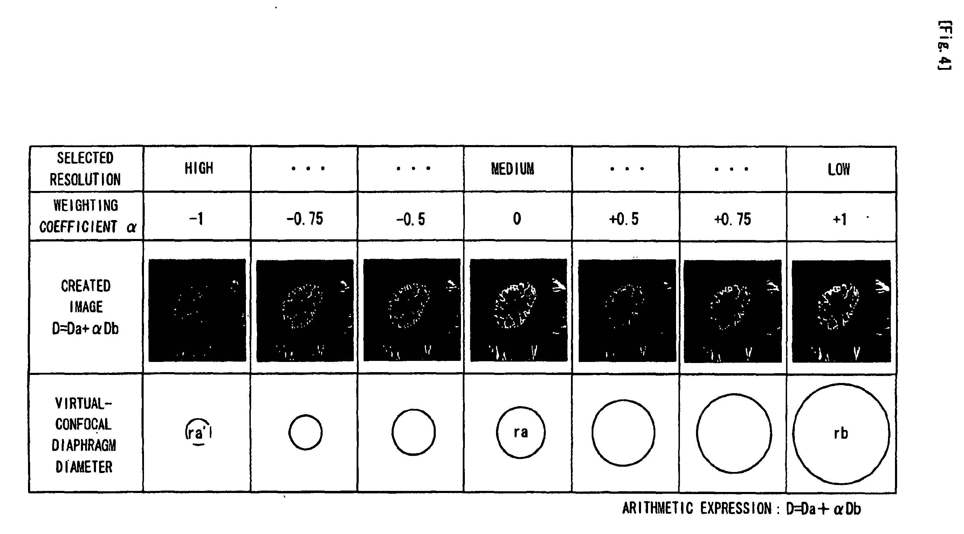

Fig. 4 is a diagram showing a relationship among the selected resolution, the weighting coefficient a, and the image data D. In Fig. 4, data about seven kinds of selected resolution including "high", "medium", and "low" is shown as a representative. In addition, in Fig. 4, along with the data, the concept of the diameter of the virtual-confocal diaphragm set in the present system is shown.

First, when the selected resolution is "medium", the weighting coefficient $\alpha$ is set to "0". In such a case, the image data D is the same as the image data Da including many items of information of the specific layer. The sectioning resolution of the image data D is therefore about the same thickness of the specific layer. This corresponds to that the diameter of the virtual-confocal diaphragm of the present system is set to "ra" (=diameter of the smaller pinhole).

When the selected resolution is "high", the weighting coefficient $\alpha$ is set to "-1". In such a case, the image data D is the image data Da including many items of information of the specific layer subtracted by the image data Db including many items of information of the peripheral layer. Due to the subtraction, it is possible to subtract the information of the peripheral layer (components that appear blurred on the microscopic image) while maintaining S/N of the data and the sectioning resolution of the image data D becomes thinner than the thickness of the specific layer.

When the selected resolution is "low", the weighting coefficient $\alpha$ is set to "+1". In such a case, the image data D is a sum of the image data Da including many items of information of the specific layer and the image data Db including many items of information of the peripheral layer. Due to this, the sectioning resolution of the image data D is the total thickness of the specific layer and the peripheral layer. This corresponds to that the diameter of the virtual-confocal diaphragm of the present system is set to "rb" (=diameter of the larger pinhole).

When the selected resolution is between "high" and "medium", the weighting coefficient a is set to a value (-0.75, -0.5, etc.) between "-1" and "0". On this occasion, the sectioning resolution of the image data D is a resolution between one when the selected resolution is "high" and one when the selected resolution is "medium". When the selected resolution is between "medium" and "low", the weighting coefficient a is set to a value (+0.5, +0.75, etc.) between "0" and "1". On this occasion, the sectioning resolution of the image data D is a resolution between one when the selected resolution is "medium" and one when the selected resolution is "low". This corresponds to a resolution similar to that when the diameter of the virtual-confocal diaphragm of the present system is set to one between ra and rb.

In other words, in the present system, it is possible to perform an operation similar to the operation to freely vary the diameter of the virtual-confocal diaphragm in the range between ra' and rb according to the direction of the operator.

(Effect of the first embodiment)

As described above, in the present system, the image data actually measured by the confocal microscope is only the two kinds of image data Da, Db with different sectioning. Therefore, the number of pinhole masks necessary for the detecting part 10 is "two" and its configuration is simple (refer to Fig. 2).

As described above, based on the two kinds of observing light flux with different sectioning, that is, the "observing light flux incident to the circular area at the center of the confocal diaphragm plane" and the "observing light flux incident to the toroidal area around the circular area (or the larger circular area including the circular area)", it is possible to obtain image data at different sectioning resolutions by arithmetic operation. Consequently, in the present system, when varying the sectioning resolution, it is not necessary for the confocal microscope to operate in any way but it is only necessary for the computer 22 to vary the diameter of the virtual-confocal diaphragm by arithmetic operation. Therefore, it is possible for the operator to arbitrarily vary the sectioning resolution with arbitral timing. In addition, when varying the sectioning resolution, since it is not necessary to irradiate the sample 0 again with illuminating light, it is unlikely that the sample 0 is damaged.

Further, since the two kinds of image data Da, Db can be obtained in parallel, it is possible to keep the amount of illuminating light to the sample 0 to the minimum necessary amount and also the damage to the sample 0 to the minimum necessary amount. In addition, the variable range of the diameter of the virtual-confocal diaphragm of the present system is from ra' to rb and the lower limit value ra' is smaller than the diameter of the smaller pinhole actually provided to the confocal microscope (refer to Fig. 4). This is because the negative range ($\alpha<0$) is included in the range the weighting coefficient $\alpha$ in the arithmetic expression (expression (1) or expression (2)) can assume. Consequently, a sectioning resolution higher than the capability possessed by the single confocal microscope is realized.

Since the arithmetic expression (expression (1) or expression (2)) is the expression of a simple weighted sum or weighted average, it is possible for the computer 22 to vary the diameter of the virtual-confocal diaphragm in an extremely brief time. Therefore, it is also possible for the present system to vary the sectioning resolution in real time while displaying the microscopic image on the monitor 23.

(Variant example of pinhole diameter)

In the present embodiment, the diameter rb of the larger pinhole is set to a value twice the diameter ra of the smaller pinhole, however, it may be set to another magnification. However, it is desirable that the diameter rb be not greater than four times the diameter ra. The difference between the case of three times and the case of four times will be described below.

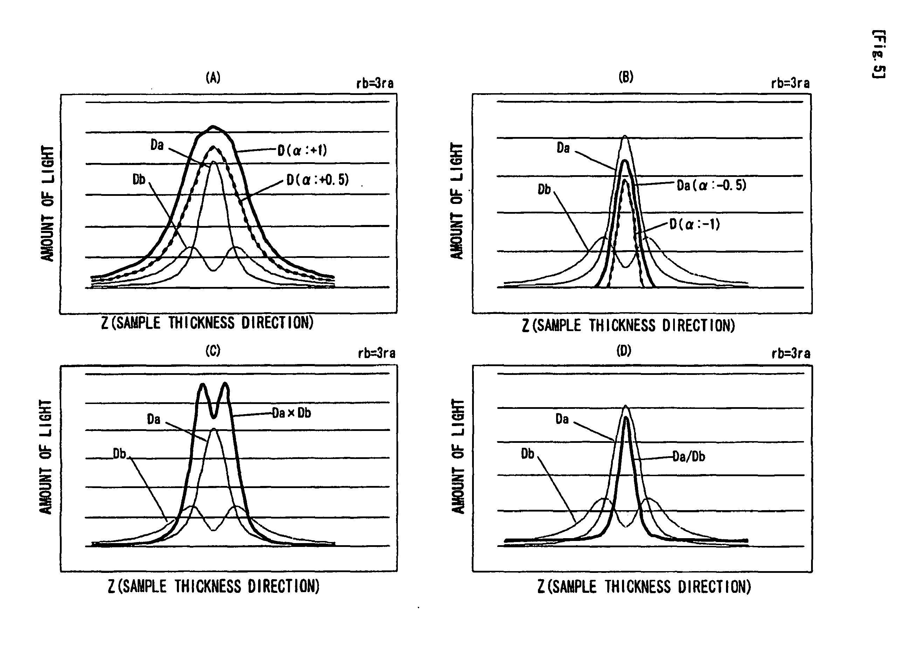

Figs. 5(A) and 5(B) are diagrams showing information (the position of the depth of the sample - the relative value of the amount of reflected light) reflected in each image data acquired in the setting of rb=3ra. It is shown that the narrower the width of the curve is, the higher the sectioning resolution is, and the higher the curve is, the brighter. D ($\alpha$: + 1), D ($\alpha$: +0.5) in Fig. 5(A) are curves of the image data D when $\alpha$=+1, $\alpha$=+0.5 and D ($\alpha$: -1), D ($\alpha$: -0.5) in Fig. 5(B) are curves of the image data D when $\alpha$=-1, $\alpha$=-0.5.

Referring to Figs. 5(A) and 5(B), it can be seen that the image data Da includes many items of information of the specific layer of the sample 0 and the image data Db includes many items of information of the peripheral layer. Then, it is also known that the curves of the image data D ($\alpha$: +1), D ($\alpha$: +0.5), D ($\alpha$: -1), D ($\alpha$: -0.5) have a width and a height to a certain degree, respectively. In addition, from the comparison among the widths of the curves D ($\alpha$: + 1), D ($\alpha$: +0.5), D ($\alpha$: -1), D ($\alpha$: -0.5), it is also known that a distinct difference is produced.

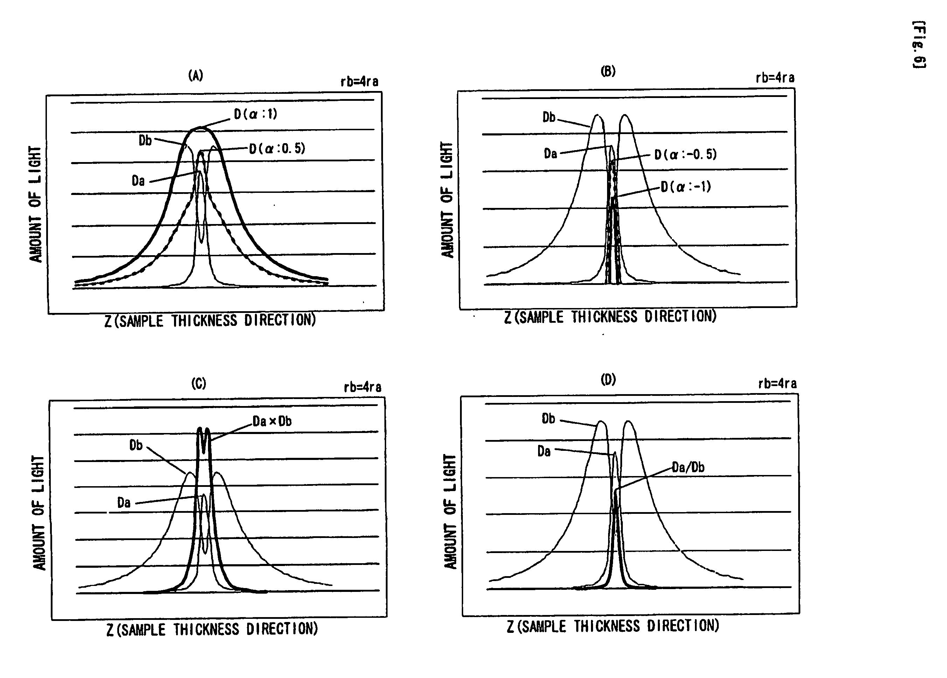

Consequently, it is known that the setting of rb=3ra is suitable for varying the sectioning resolution in a variety of ways. On the other hand, Figs. 6(A) and 6(B) are diagrams showing information reflected in each image data acquired in the setting of rb=4ra. The display method of Figs. 6(A) and 6(B) are the same as that of Figs. 5(A) and 5(B).

Referring to Figs. 6(A) and 6(B), it is known that the curve of the image data D ($\alpha$: +0.5) has a central part too pointed compared to other parts. Further, it is known that the curves of the image data D ($\alpha$: -1), D ($\alpha$: -0.5) are too steep and there is no distinct difference in comparison between both widths. Consequently, it is known that the setting of rb=4ra is not so suitable for varying the sectioning resolution in a variety of ways.

In other words, it is necessary to set so that rb<4ra in order to vary the sectioning resolution in a variety of ways. In particular, if the setting is made so that rb=2ra as in the present embodiment, there is an advantage that the relationship between the selected resolution and the weighting coefficient a becomes simple (that is, it is only necessary to shift the weighting coefficient a in the range of -1 to +1 in accordance with the selected resolution).

(Variant example of arithmetic content)

In the present embodiment (in the case where rb=2ra), the upper limit of the range the weighting coefficient $\alpha$ can assume is set to "+1", however, it may also be possible to extend the range by setting the upper limit to greater than +1.

Incidentally, the relationship between the size of the diameter set to the virtual-confocal diaphragm and

the weighting coefficient $\alpha$ differs depending on the relationship between the diameters ra, rb, and therefore, it is necessary to properly set the relationship between the selected resolution and the weighting coefficient $\alpha$ in accordance with the relationship between the diameters ra, rb.

In addition, in the present embodiment, when the image data D is created, the weighted sum of the image data Da, Db is acquired (refer to expressions (1), (2)), however, it may also be possible to acquire the product (Da · Db) of the image data Da, Db, and the quotient (Da/Db) of the image data Da, Db then use them to create the image data D.

Fig. 5 (C) is a diagram showing information reflected in the product (Da · Db) acquired in the setting of rb=3ra and Fig. 5(D) is a diagram showing information reflected in the quotient (Da/Db) acquired in the setting of rb=3ra.

In these diagrams, the curve (Fig. 5(D)) of the quotient (Da/Db) resembles particularly the curve of the image data D($\alpha$: -1) shown in Fig. 5(B). Consequently, in the present embodiment, it is also possible to use the quotient (Da/Db) instead of the image data D ($\alpha$:=1).

However, if the quotient (Da/Db) is used as it is as the image data D, there is the possibility that part of the pixel values of the image data D becomes abnormal values. In order to prevent this, it is recommended to use the pixel values of the image data D as they are instead of the quotient (Da/Db) for the pixels whose values are particularly small (for example, less than one-tenth of the maximum value) in the image data Db.

Incidentally, Fig. 6(C) is a diagram showing information reflected in the product (Da· Db) acquired in the setting of rb=4ra and Fig. 6(D) is a diagram showing information reflected in the quotient (Da/Db) acquired in the setting of rb=4ra. Among these, referring to Fig. 6(D), it is known that the shape of the curve of the quotient (Da/Db) is preferable even in the setting of rb=4ra. Consequently, there is the possibility that the quotient (Da/Db) can be utilized as the image data D at a high sectioning resolution even in the setting of rb=4ra.

In the present embodiment, it may also be possible to cause the circuit part 21 to perform part or the whole of the arithmetic operations having been performed in the computer 22 (in this case, an adder or a multiplier is provided in the circuit part 21). However, in either case, there is an advantage that the arithmetic content can be changed freely if the actually measured image data Da, Db are stored individually before arithmetic operation and arithmetic operation is carried out only when necessary.

(Variant example of detecting part 10 not being part of the invention)

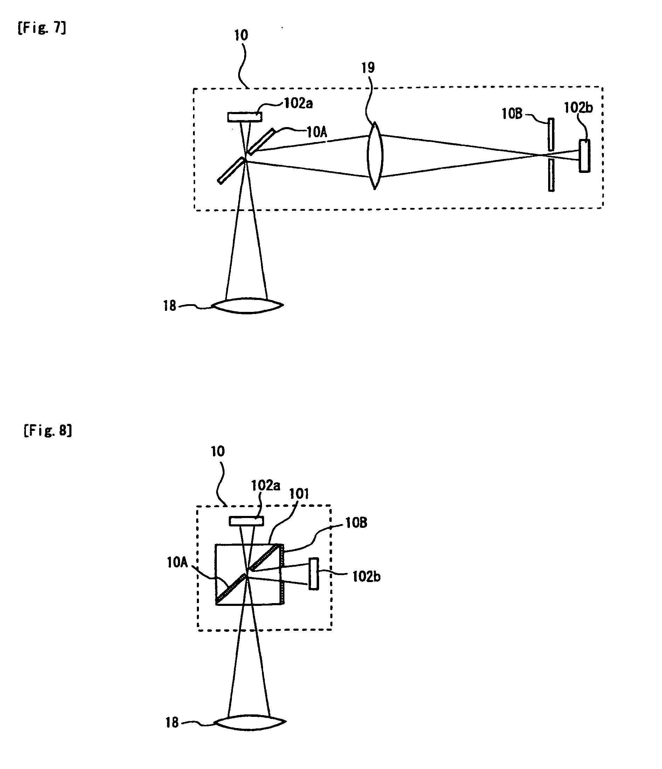

The detecting part 10 may be modified as shown in Fig. 7. Fig. 7 is a diagram for illustrating the detecting part 10 in the present variant example. The detecting part 10 is also provided with the small-diameter pinhole mask 10A, the large-diameter pinhole mask 10B, and the two light detectors 102a, 102b.

The pinhole mask 10A is arranged in an inclined posture in the plane substantially at the center of the focal depth of the collecting lens 18, as in the first embodiment. In addition, the masking plane on the incidence side of the pinhole mask 10A constitutes a reflecting plane as in the first embodiment.

On the other hand, the pinhole mask 10B is arranged at a position on the path of reflected light of the pinhole mask 10A and apart from the pinhole mask 10A. However, the pinhole mask 10B is coupled to the pinhole mask 10A in substantially a conjugate relationship by the lens 19.

Then, the amount of light of observing light flux having transmitted the pinhole mask 10A is detected by the light detector 102a and the amount of light of observing light flux having transmitted the pinhole mask 10B is detected by the light detector 102b.

(Variant example of detecting part 10 not being part of the invention)

The detecting part 10 may be modified as shown in Fig. 8. Fig. 8 is a diagram for illustrating the detecting part 10 in the present variant example. The detecting part 10 is also provided with the masking component 101 and the two light detectors 102a, 102b.

The masking component 101 is made by forming a reflecting film etc. of a proper pattern on a substrate transparent to the observing light flux. The masking component is arranged in the vicinity of the focal point of the collecting lens 18.

In the masking component 101, the small-diameter pinhole mask 10A and the large-diameter pinhole mask 10B are formed.

The pinhole mask 10A is arranged in an inclined posture in the plane substantially at the center of the focal depth of the collecting lens 18. The masking plane on the incidence side of the pinhole mask 10A constitutes a reflecting plane. The pinhole mask 10B is arranged at a position that receives the observing light flux reflected from the pinhole mask 10A. The place where the pinhole mask 10B is arranged is also included within the focal depth of the collection lens 18.

Then, the amount of light of observing light flux having transmitted the pinhole mask 10A is detected by the light detector 102a and the amount of light of observing light flux having transmitted the pinhole mask 10B is detected by the light detector 102b.

(Variant example of detecting part 10)

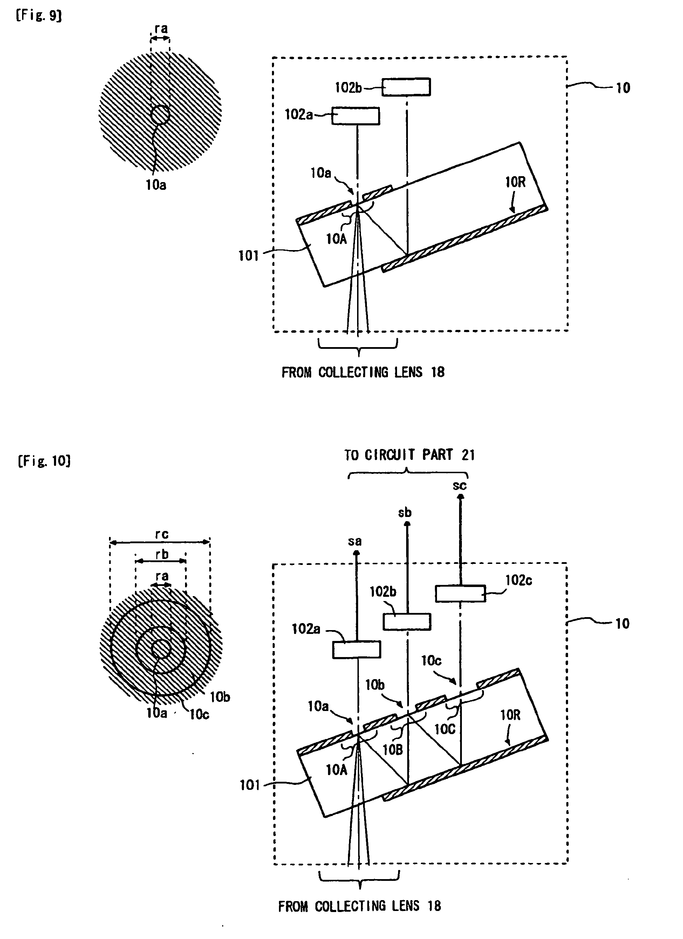

The detecting part 10 may be modified as shown in Fig. 9. Fig. 9 is a diagram for illustrating the detecting part 10 in the present variant example. The detecting part 10 is the detecting part shown in Fig. 2 from which the pinhole mask 10B is omitted. However, in the detecting part 10, since rb>>4ra, its main function is to switch over between the confocal mode and the non-confocal mode rather than to vary the sectioning resolution. Incidentally, the switchover is realized by switching the weighting coefficient a between zero and one.

(Other variant examples of detecting part 10)

Further, as long as it can detect the amounts of light of two kinds of observing light flux individually, a detecting part other those shown in Fig. 7, Fig. 8, and Fig. 9 can be used as the detecting part 10. For example, a detecting part that shares one light detector for detecting two kinds of observing light flux can be applied. Furthermore, a detecting part using a confocal diaphragm the diameter of which is variable, or a detecting part in which plural kinds of pinhole component are switched over and arranged can be applied. However, it is not possible for these detecting parts to simultaneously detect two kinds of observing light flux, and therefore, the amount of illuminating light for the sample 0 will increase.

In the case where a confocal diaphragm the diameter of which is variable is used, or in the case where pinhole components of different diameters are switched over and arranged (that is, in the case where the diameter of the confocal diaphragm is varied), the two light fluxes to be directly detected somewhat differ from the two light fluxes in the embodiment and variant examples described above.

In other words, while in the embodiment and variant examples described above, the objects to be detected are the two light fluxes, that is, the "observing light flux incident to the circular area at the center of the confocal diaphragm plane" and the "observing light flux incident to the toroidal area around the circular area", when the diameter of the confocal diaphragm is varied, the objects for which the amount of light is to be detected are the two light fluxes, that is, the "observing light flux incident to the circular area at the center of the confocal diaphragm plane" and the "observing light flux incident to the larger circular area including the circular region".

Consequently, the arithmetic content will be one in accordance therewith. For example, when the diameter of the confocal diaphragm is varied to ra and rb (rb=2ra), if the image data acquired in the setting in which the diameter is set to ra is assumed to be Da, and the image data acquired in the setting in which the diameter is set to rb is assumed to be Db', a confocal image at a virtual-confocal diaphragm with a diameter smaller than ra can be obtained from 2Da-Db'.

[Second embodiment]

A second embodiment of the present invention will be described. The present embodiment is also an embodiment of a confocal microscope system. Here, only differences from the first embodiment are described. The difference lies in that the number of image data actually measured is increased from "two" to "three".

Fig. 10 is a diagram for illustrating a detecting part 10 in the present embodiment. A main difference from the detecting part shown in Fig. 2 lies in that a pinhole mask 10C and a light detector 102c are added.
In the masking component 101, the making plane on the incidence side of the pinhole mask 10B constitutes a reflecting plane. The relationship in arrangement between the pinhole mask 10C and the pinhole mask 10B is the same as the relationship in arrangement between the pinhole mask 10B and the pinhole mask 10A. In addition, the place where the pinhole mask 10C is arranged is included within the focal depth of the collection lens 18, together with the pinhole masks 10A, 10B.

The observing light flux incident to the periphery of the pinhole 10b of the pinhole mask 10B reflects from the pinhole mask 10B and travels toward the pinhole mask 10C via the reflecting plane 10R. The diameter rc of the pinhole 10c of the pinhole mask 10C is greater than the diameter rb of the pinhole 10b, for example, rc=2rb.
Consequently, among the observing light fluxes incident to the pinhole mask 10C, the observing light flux incident into the pinhole 10c transmits the pinhole mask 10C and the observing light flux incident to the periphery of the pinhole 10c is cut by the pinhole mask 10C.

On the left-hand side of Fig. 10, a rough relationship in magnitude among the section of the observing light flux, the pinhole 10a, the pinhole 10b, and the pinhole 10c is shown.
According to the masking component 101, the observing light fluxes from the collecting lens 18 are divided into three, that is, the "observing light flux incident into the pinhole 10a", the "observing light flux incident into the pinhole 10b not into the pinhole 10a", and the "observing light flux incident into the pinhole 10c not into the pinhole 10a or 10b". Then, the amounts of light of these three kinds of observing light flux are detected simultaneously and individually by the light detectors 102a, 102b, and 102c.

The detection signals sa, sb, and sc generated individually by these light detectors 102a, 102b, and 102c are taken into the circuit part sequentially. Although not shown schematically, since the number of kinds of detection signal is increased from "two" to "three" in the present embodiment, the number of I/V converters and the A/D converters in the circuit part, and the number of frame memories in the computer are also increased from "two" to "three". Then, the computer in the present embodiment creates image data Dc based on the detection signal sc as in the case where it creates the image data Da, Db based on the detection signals sa, sb.

Here, it is possible for the operator of the present system to select the sectioning resolution and the brightness to the computer in the present system with desired timing before or after acquiring the image data Da, Db, and Dc.

The computer performs arithmetic operations in accordance with the selected resolution and brightness for the three kinds of image data Da, Db, and Dc to create the image data D and displays it on the monitor.

Here, the arithmetic operation to create the image data D is the weighted sum of the image data Da, Db, and Dc for each pixel and expressed, for example, by the following expression (3).

$$D=Da+\alpha \cdot Db+\beta \cdot Dc \cdots (3)$$

Then, the combination of the weighting coefficients $\alpha$, $\beta$ in expression (3) are set in accordance with the selected resolution and the brightness. For example, if the weighting coefficient $\alpha$ is set to a positive value and the weighting coefficient $\beta$ is set to a negative value, and both are set properly in magnitude, it is possible to increase the sectioning resolution and brightly represent the position in focus (specific layer).

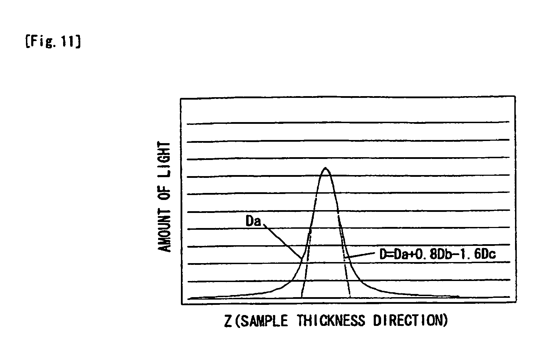

Fig. 11 is a diagram showing information reflected in the image data acquired in the setting of $\alpha=+0.8$, $\beta=-1.6$ in the present embodiment. The notational system of Fig. 11 is the same as that of Fig. 5.

Referring to Fig. 11, it is known that the width of the curve of the image data D is narrower than that of the image data Da and the height of the curve of the image data D is the same as that of the image data Da. Consequently, it is known that the image data D is represented in such a manner that the sectioning resolution is higher than that of the image data Da and the specific layer is represented as brightly as that of the image data Da.

As described above, in the present embodiment, since the number of image data to be measured actually is increased by one, the number of parameters (weighting coefficients) when the image data D is created is increased by one. As a result, it is made possible to control both the sectioning resolution of the image data D and the brightness of the specific layer by arithmetic operations.

(Variant example of arithmetic content)

Although the computer in the present embodiment sets the combination of the weighting coefficients $\alpha$, $\beta$ in accordance with the direction from the operator, the degree of freedom may be limited intentionally if it is not necessary to increase the degree of freedom in varying the sectioning resolution and brightness. An example when the degree of freedom is limited is as follows.

<$\alpha=+1$: when $\alpha$ is fixed to +1 >

In this case, expression (3) will be D=(Da+Db) +$\beta \cdot$ Dc and the first term is fixed and only the second term is variable. This corresponds to the case where the diameters of the two pinholes are set to rb, rc in the first embodiment. In other words, the diameter of the virtual-confocal diaphragm becomes variable near rb, rc.

<$\beta=0$: when $\beta$ is fixed to 0>

In this case, expression (3) will be D=Da+$\alpha \cdot$ Db. This corresponds to the same case as in the first embodiment. In other words, the diameter of the virtual-confocal diaphragm becomes variable near ra, rb.

<$\alpha=\beta$: $\alpha$ is set equal to $\beta$>

In this case, expression (3) will be D=Da+$\alpha \cdot$ (Db+Dc) and the first term is fixed and only the second term is variable. This corresponds to the case where the diameters of the two pinholes are set to ra, rc in the first embodiment. In other words, the diameter of the virtual-confocal diaphragm becomes variable near ra, rc.

**Claims**

1. A confocal microscope apparatus comprising:

   a light source (11);
   an illuminating optical system (12) collecting light from the light source (11) and focusing the light onto a sample (0);
   an image forming optical system imaging light from the sample (0), whereby the confocal microscope apparatus is **characterized by**
   a detecting unit (10) adapted for dividing light, falling on substantially conjugate position to a collecting point on the sample with respect to the image forming optical system, into at least a light from a vicinity area of the collecting point on the sample and light from a peripheral of the vicinity area, and detecting each of the lights, wherein
   the detecting unit (10) includes:
   a masking component (101) made by forming a reflecting film (10A, 10B) on a transparent substrate and arranged in inclined posture to a light axis within a focal depth of the image forming optical system; wherein
   said reflecting film (10A, 10B) is patterned in order to divide light falling on the substantially conjugate position into the light from the vicinity area and the light from the peripheral area;
   a first detector (102a) adapted for individually detecting the light from the vicinity area and a second detector (102b) adapted for detecting the light from the peripheral area: and
   an arithmetical unit (21) adapted for performing arithmetic operations on data of arbitrary sectioning resolution by using a first data (sa) generated by the first detector (102a) which detects the light from the vicinity area and second data (sb) generated by the second detector (102b) which detects the light from the peripheral area.

2. The confocal microscope apparatus according to claim 1, wherein:

the arithmetical unit performs an arithmetic operation of weighted sum of said first data and the second data.

3. The confocal microscope apparatus according to claim 2, wherein:

when a weighting coefficient of said first data is one, the weighting coefficient $\alpha$ of the second data is set in the range of $1 \geq \alpha$.

4. The confocal microscope apparatus according to any one of claims 1 to 3, wherein:

the arithmetical unit performs an arithmetic operation of dividing the first data by the second data.

5. The confocal microscope apparatus according to any one of claims 1 to 4, wherein:

the reflecting film (10A, 10B) includes a circular first aperture (10a) which receives the light from the vicinity area and a second aperture (10b) which receives the light from the peripheral area; and

the reflecting film places a plurality of apertures (10A, 10B) in serial relation to a light path and the diameter of the apertures (10A, 10B) increases with the light path.

**Patentansprüche**

1. Konfokale Mikroskopvorrichtung, umfassend:

eine Lichtquelle (11);

ein optisches Beleuchtungssystem (12), das Licht von der Lichtquelle (11) sammelt und das Licht auf eine Probe (0) fokussiert;

ein optisches Bilderzeugungssystem, das Licht von der Probe (0) abbildet, wobei die konfokale Mikroskopvorrichtung **gekennzeichnet ist durch**:

eine Erfassungseinheit (10), die so ausgelegt ist, dass sie Licht, das auf eine im Wesentlichen konjugierte Position zu einem Sammelpunkt auf der Probe in Bezug auf das optische Bilderzeugungssystem fällt, in mindestens ein Licht von einem Nachbarschaftsbereich des Sammelpunkts auf der Probe und Licht von einem Umfangs- des Nachbarschaftsbereichs teilt und jedes der Lichter erfasst, wobei

die Erfassungseinheit (10) umfasst:

eine Maskierungskomponente (101), die **durch** Bilden eines reflektierenden Films (10A, 10B) auf einem transparenten Substrat hergestellt und in einer geneigten Stellung zu einer Lichtachse innerhalb einer Fokustiefe des optischen Bilderzeugungssystems angeordnet ist; wobei der reflektierende Film (10A, 10B) so gemustert ist, dass er Licht, das auf die im Wesentlichen konjugierte Position fällt, in das Licht vom Nachbarschaftsbereich und das Licht vom Umfangsbereich teilt;

einen ersten Detektor (102a), der so ausgelegt ist, dass er das Licht vom Nachbarschaftsbereich einzeln erfasst, und einen zweiten Detektor (102b), der so ausgelegt ist, dass er das Licht vom Umfangsbereich erfasst; und

eine arithmetische Einheit (21), die so ausgelegt ist, dass sie arithmetische Operationen an Daten von beliebiger Sektionierungsauflösung **durch** Verwenden von ersten Daten (sa), die **durch** den ersten Detektor (102a) erzeugt werden, welcher das Licht vom Nachbarschaftsbereich erfasst, und zweiten Daten (sb) durchführt, die **durch** den zweiten Detektor (102b) erzeugt werden, welcher das Licht vom Umfangsbereich erfasst.

2. Konfokale Mikroskopvorrichtung nach Anspruch 1, wobei:

die arithmetische Einheit eine arithmetische Operation der gewichteten Summe der ersten und der zweiten Daten durchführt.

3. Konfokale Mikroskopvorrichtung nach Anspruch 2, wobei:

wenn ein Gewichtungskoeffizient der ersten Daten eins ist, der Gewichtungskoeffizient $\alpha$ der zweiten Daten im Bereich von $1 \geq \alpha$ festgelegt ist.

4. Konfokale Mikroskopvorrichtung nach einem der Ansprüche 1 bis 3, wobei:

die arithmetische Einheit eine arithmetische Operation des Teilens der ersten Daten durch die zweiten Daten durchführt.

5. Konfokale Mikroskopvorrichtung nach einem der Ansprüche 1 bis 4, wobei:

der reflektierende Film (10A, 10B) eine kreisförmige erste Öffnung (10a), welche das Licht vom Nachbarschaftsbereich empfängt, und eine zweite Öffnung (10b) umfasst, welche das Licht vom Umfangsbereich empfängt; und

der reflektierende Film eine Mehrzahl von Öffnungen (10a, 10b) in Reihenbeziehung zu einem Lichtpfad anordnet, und der Durchmesser der Öffnungen (10a, 10b) mit dem Lichtpfad zunimmt.

## Revendications

1. Microscope confocal comprenant :

une source de lumière (11) ;
un système optique d'éclairage (12) collectant de la lumière provenant de la source de lumière (11) et focalisant la lumière sur un échantillon (0) ;
un système optique de formation d'image imageant la lumière provenant de l'échantillon (0), moyennant quoi le microscope confocal est **caractérisé par** :
une unité de détection (10) adaptée pour diviser la lumière, tombant sur une position sensiblement conjuguée à un point de perception sur l'échantillon par rapport au système optique de formation d'image, en au moins de la lumière provenant d'une zone avoisinante du point de perception sur l'échantillon et de la lumière provenant d'une zone périphérique de la zone avoisinante, et adapté pour détecter chacune des lumières, où
l'unité de détection (10) comprend :
un composant de masquage (101) constitué en formant un film réfléchissant (10A, 10B) sur un substrat transparent et disposé dans une position inclinée par rapport à un axe de lumière dans une profondeur focale du système optique de formation d'image ; où
ledit film réfléchissant (10A, 10B) est placé à une position sensiblement conjuguée du point de perception sur l'échantillon et présente des motifs de manière à diviser la lumière tombant sur la position sensiblement conjuguée en la lumière provenant de la zone avoisinante et la lumière provenant de la zone périphérique ;
un premier détecteur (102a) adapté pour détecter individuellement la lumière provenant de la zone avoisinante et un second détecteur (102b) adapté pour détecter la lumière provenant de la zone périphérique ; et
une unité arithmétique (21) adaptée pour effectuer des opérations arithmétiques sur des données de résolution de sectionnement arbitraire à l'aide d'une première donnée (sa) générée par le premier détecteur (102a) qui détecte la lumière provenant de la zone avoisinante et d'une seconde donnée (sb) générée par le second détecteur (102b) qui détecte la lumière provenant de la zone périphérique.

2. Microscope confocal selon la revendication 1, dans lequel :

l'unité arithmétique effectue une opération arithmétique de somme pondérée de ladite première donnée et de ladite seconde donnée.

3. Microscope confocal selon la revendication 2, dans lequel :

lorsqu'un coefficient pondéré de ladite première donnée est un, le coefficient de pondération a de la seconde donnée est défini dans la plage donnée par $1 \geq \alpha$.

4. Microscope confocal selon l'une quelconque des revendications 1 à 3, dans lequel :

l'unité arithmétique effectue une opération arithmétique consistant à diviser la première donnée par la seconde donnée.

5. Microscope confocal selon l'une quelconque des revendications 1 à 4, dans lequel :

le film réfléchissant (10A, 10B) comprend une première ouverture circulaire (10a) qui reçoit la lumière de la zone avoisinante et une seconde ouverture (10b) qui reçoit la lumière de la zone périphérique ; et
le film réfléchissant place une pluralité d'ouvertures (10a, 10b) en relation en série avec un chemin de lumière, et le diamètre des ouvertures (10a, 10b) augmente avec le chemin de lumière.

[Fig. 1]

[Fig. 2]

TO CIRCUIT PART 21

sa    sb

rb

ra

102a    102b

10

10b

10a    10b

10A    10B    10R

10b    10a

101

FROM COLLECTING LENS 18

[Fig. 3]

[Fig. 4]

EP 1 906 224 B1

| SELECTED RESOLUTION | HIGH | . . . | . . . | MEDIUM | . . . | . . . | LOW |
|---|---|---|---|---|---|---|---|
| WEIGHTING COEFFICIENT $\alpha$ | −1 | −0.75 | −0.5 | 0 | +0.5 | +0.75 | +1 |
| CREATED IMAGE D=Da+ $\alpha$ Db | | | | | | | |
| VIRTUAL‐CONFOCAL DIAPHRAGM DIAMETER | (ra') | ◯ | ◯ | ra | ◯ | ◯ | rb |

ARITHMETIC EXPRESSION : D=Da+ $\alpha$ Db

[Fig. 5]

[Fig. 6]

[Fig. 7]

[Fig. 8]

[Fig. 9]

ra

10a

10

102b

102a

10a

10R

101

10A

FROM COLLECTING LENS 18

[Fig. 10]

TO CIRCUIT PART 21

sc

sb

sa

rc

rb

ra

10b

10a   10c

102c

102b

102a

10

10c

10b

10a

10R

101

10A   10B   10C

FROM COLLECTING LENS 18

EP 1 906 224 B1

[Fig. 11]

Z(SAMPLE THICKNESS DIRECTION)

19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI616927 B
- JP HEI10104522 B
- US 200741089 B